# EUROPEAN PATENT APPLICATION

(11) **EP 1 739 409 A1**
(43) Date of publication of application: **03.01.2007**
(21) Application number: 06253328.6
(22) Date of filing: 27.06.2006
(51) Int. Cl.: G01N 21/956, F01D 5/18, G01N 25/72, G01B 11/00, G01M 19/00, G06T 17/40

(54) **Thermal imaging and laser scanning systems and methods for determining the location and angular orientation of a hole with an obstructed opening residing on a surface of an article**

(30) Priority: 28.06.2005 US 170025
(71) Applicant: UNITED TECHNOLOGIES CORPORATION, Hartford, Connecticut 06101 (US)
(72) Inventor: Vaidyanathan, Janakiraman, South Windsor, CT 06074 (US)
(74) Representative: Leckey, David Herbert

(57) **Abstract**

Provided are methods (100) and systems (10) for determining both the location and angular orientation of holes (12) with openings (14) on a surface (16) of an article (18) that are at least partially obstructed. In a method of the present invention, a thermal imaging and scanning system (10) that includes an infrared camera (44), a heater (58), a laser spot projector (46), a laser spot sensor (48), a memory device (40) and a processor (42) is provided. A digital, infrared pixel image of an article (18) is acquired with the camera (44) while the article (18) is heated. Holes (12) with the least amount of obstruction are identified as candidate holes (12) for scanning. A laser beam (44) is projected onto the surface (16) of the article (18) in a region (24) containing at least one candidate hole (12) and the spot sensor (48) receives light reflections (52). A series of points (54) representing the scanned region (24) is stored as a point cloud (70) in the memory device (40). The point cloud (70) is then manipulated to calculate the location and angular orientation of each hole (12) in the region (24) in relation to one or more pre-existing, article datum (22).

## Description

### BACKGROUND OF THE INVENTION

### (1) FIELD OF THE INVENTION

The invention relates to gas turbine engine components, and more particularly to systems and methods for determining the location and angular orientation of a hole containing an obstructed opening on a surface of such components.

### (2) DESCRIPTION OF THE RELATED ART

Many internal components of gas turbine engines are exposed to gas temperatures that exceed their base material's melting temperature. For that reason, internal components such as turbine rotor blades, turbine vanes, combustor liners, shroud segments and the like must be thermally protected for improved durability. Typically, internal channels direct lower-temperature air inside these components to reduce their temperature. The lower-temperature air exits the components via a series of small holes, forming a protective film that surrounds the external surfaces of the components. These holes, typically called film-cooling holes, are sized, located and angularly oriented to apportion the lower-temperature air only where it is required. The surfaces are usually further protected with insulating, thermal barrier coatings (TBCs). Typical, state of the art coatings comprise a metallic bond layer and a ceramic top layer. Despite the use of film cooling and thermal barrier coating, some components deteriorate over time and must eventually be restored or replaced altogether. Typically, one or more approved repairs can restore a deteriorated component to a like-new condition at a fraction of the cost of a replacement component.

Conventional restoration of a deteriorated component begins with the removal of the thermal barrier coating by chemical and/or mechanical means. Once the coating is removed, the component is inspected for distress and scrapped if found unserviceable. If the distress is within serviceable limits, the areas of distress and the multitude of film cooling holes are filled using the TURBOFIX ® diffusion brazing repair process available under license from the assignee of the present invention. The TURBOFIX ® diffusion brazed surfaces are then abrasively blended before new coating is applied. Once the component is coated, each of the film cooling holes is re-drilled using a laser, abrasive water jet, or other suitable drilling means.

In some instances, a component may only require the removal of the coating and application of a new coating to restore the component to like-new condition. Unfortunately, the application of the new coating partially or wholly obstructs the openings of the original film cooling holes. Even the slightest obstruction can negatively affect the film cooling of the component surfaces. In these instances, if it were possible to precisely determine the location and angular orientation of the film cooling holes even though they are partially or wholly obstructed with coating, then the coating could be reamed from the openings using a laser, abrasive water jet or other suitable drilling means. The application of new coating and reaming of the film cooling holes eliminates the time-consuming TURBOFIX ® diffusion brazing and blending repair steps. Any reduction in component restoration time or cost significantly benefits a gas turbine engine operator.

There are many challenges involved with determining the location and angular orientation of film cooling holes with obstructed openings. First, the hole diameters are very small, typically less than 0.020 inch (0.5 mm). Second, the hole openings are at least partially obstructed with a coating having a thickness of between 0.002-0.020 inch (0.05 - 0.5 mm). Third, the hole openings are located on complex, three-dimensional surfaces that may vary slightly from component to component due to manufacturing tolerances and with extended operation at high temperatures.

One method of determining the locations of film cooling holes uses a manual vision system. According to this method, the locations of the holes are manually located by viewing each hole through a vision system camera that projects a magnified two-dimensional image of the hole opening on a video monitor. This method is labor intensive and since the operator only views a two-dimensional projection from the top of the holes, the hole's angular orientation is not accurately determined.

Another method of inspecting the location of film cooling holes uses an illumination system. According to this method, an array of holes is illuminated from within an internal cavity. An external video camera collects luminance data for display on a monitor and comparison to a reference luminance. This inspection method is useful for determining if a proper size hole is present, but does not verify the exact location and angular orientation of the holes. Also, this method is inoperable for holes that are partially or wholly obstructed with a coating.

Yet another method of inspecting film cooling holes uses an infrared radiometer system. According to this method, hot and cold air is alternately directed into hollow channels within a component and allowed to exit the cooling holes. An imaging infrared radiometer generates a series of images during the heat-up and cool-down cycles. This method is useful for inspecting for the existence of the holes, but does not verify their exact location and angular orientation.

What is therefore needed is automated systems and methods for determining the location and angular orientation of a pattern of holes with openings that are at least partially obstructed.

### BRIEF SUMMARY OF THE INVENTION

Since most holes are originally drilled in a pattern, with constant spacing and angular orientation, it has been found that information about the entire pattern may be gained by inspecting a few individual holes within the pattern.

Provided are thermal imaging and laser scanning systems and methods for determining both the location and angular orientation of holes with openings that are at least partially obstructed. Candidate holes are identified by use of a thermal imaging method for subsequent laser scanning and calculation of hole location and orientation.

In a method of the present invention, a radiant heater and a thermal imaging system including an infrared camera and a scanning system including a laser spot projector, a laser spot sensor, a memory device and a processor are provided. An article containing obstructed holes is uniformly heated with a radiant heater until a nearly steady temperature is maintained. The infrared camera captures both a two-dimensional, black and white digital image and a one-dimensional, infrared digital image of the article for storage in the memory device. Since the holes are cooler than the surrounding article surface, a large temperature gradient is visible in the thermal image at the hole to surface interface. From the two digital images, a two-dimensional grid is generated, which represents the temperature profile of the part at each optical pixel grid of the image. In order to differentiate candidate holes from the surface, isothermal profiles are created from the temperature profiles. The holes with the least level of obstruction are spotted by their temperature isothermal profiles and are identified as candidate holes for subsequent laser scanning. The identification of these candidate holes for use in the laser scanning steps reduces the overall scanning time.

After the candidate holes are identified, a laser beam is projected onto the surface in a region containing the candidate holes and the spot sensor receives light reflections. A series of points representing the scanned region is stored as a point cloud in the memory device. The point cloud is then manipulated to calculate the location and angular orientation of each candidate hole in the region in relation to a pattern of holes and one or more pre-existing, article datum.

### BRIEF DESCRIPTION OF THE SEVERAL VIEWS OF THE DRAWINGS

FIG. 1 is a simplified perspective view of a thermal imaging and laser-scanning system in accordance with an embodiment of the present invention.
FIG. 2 is a perspective view of a typical gas turbine engine turbine vane, illustrating a region containing several holes with various levels of thermal barrier coating obstruction.
FIG. 3 is a schematic diagram detailing various steps according to a method of the present invention.
FIG. 4 is a thermal image illustrating thermal profiles of a hole region of the heated vane of FIG. 2, acquired by the system of FIG. 1.

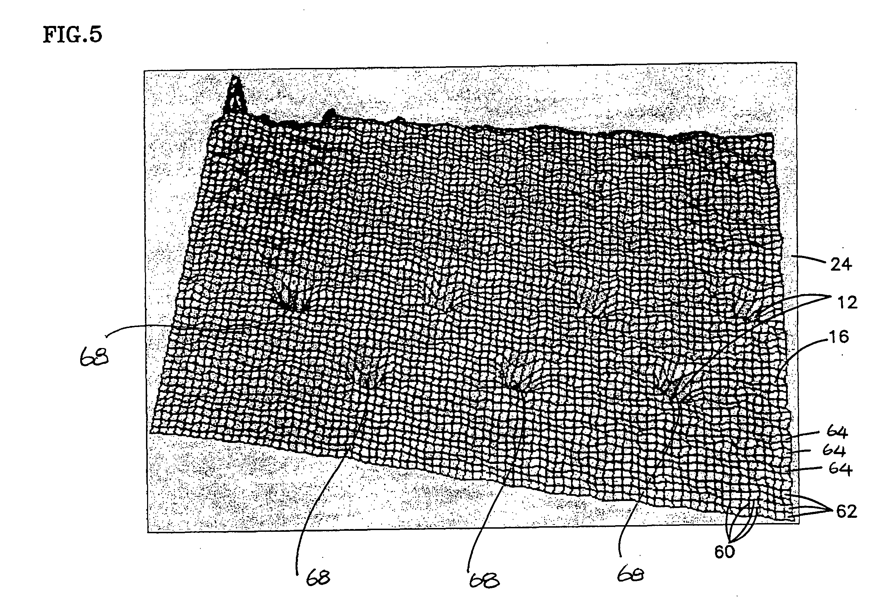

FIG. 5 is a two-dimensional surface temperature profile of the hole region of FIG. 4.
FIG. 6 is a partial perspective schematic view of a point cloud scan of a portion of the hole region of FIG. 4 generated by the system of FIG 1.
FIG. 6a is a close up, partial perspective view of the point cloud scan of FIG. 6.
FIG. 7 is a partial perspective view showing the location and angular orientation of the holes included in the portion of the region of FIG. 4.

When referring to the above listed drawings, like reference numerals designate identical or corresponding elements throughout the various views.

### DETAILED DESCRIPTION OF THE INVENTION

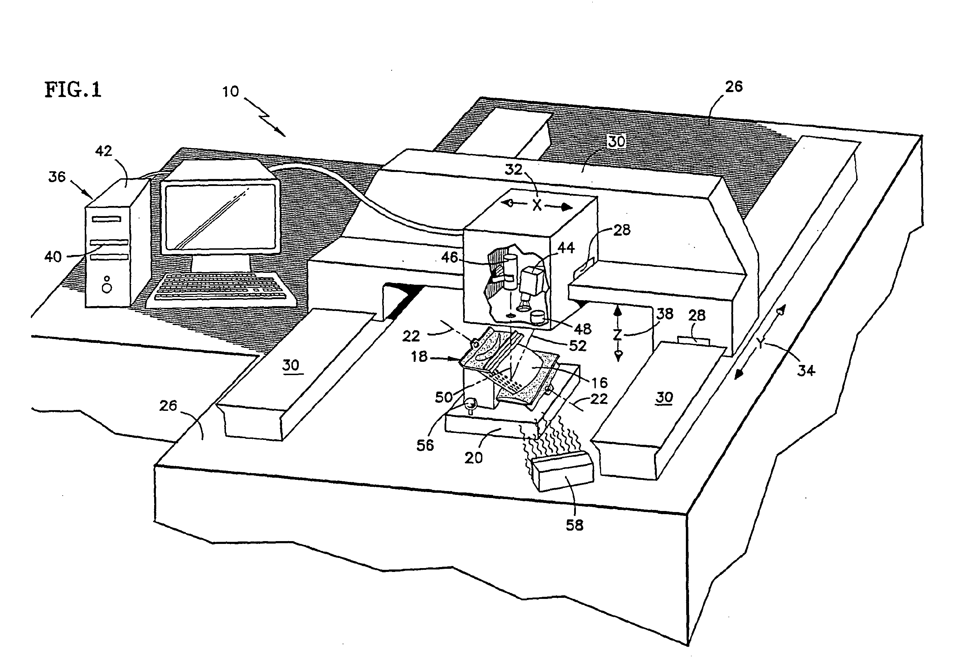

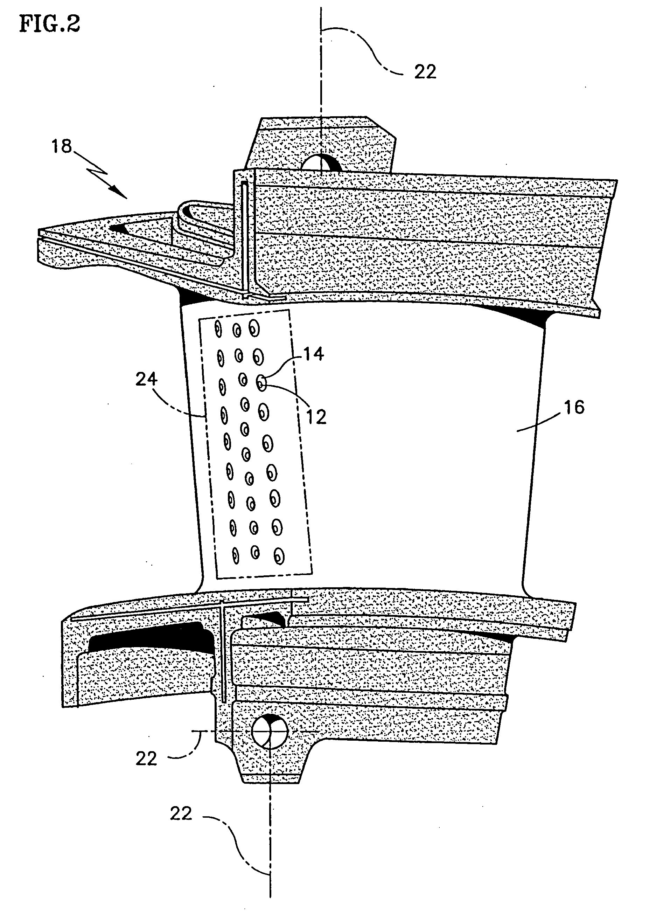

As illustrated in FIG. 1, a thermal imaging and laser scanning system 10 of the present invention is used to determine the location and angular orientation of one or more holes 12 with obstructed openings 14 on a surface 16 of a typical article 18 as illustrated in FIG. 2. In the example shown, the article 18 is a vane for use inside a gas turbine engine. The thermal imaging portion of system 10 is initially used to identify one or more candidate holes 12 for further processing by the laser-scanning portion of system 10. The candidate holes 12 have the least amount of obstruction and therefore contain more useable information about the hole location and angular orientation. By identifying candidate holes 12 in a given hole pattern using the thermal imaging portion of system 10, the processing time required by the laser-scanning portion of system 10 is substantially reduced.

In system 10, a stationary fixture 20 accurately establishes the location of the article 18 according to one or more preexisting article datum 22. A region 24 of the surface 16 containing the holes 12 and openings 14 is oriented for maximum exposure to the system 10. The use of an accurate fixture 20 is extremely important, since the resulting hole 12 locations and angular orientations are calculated and stored in relation to the one or more article datum 22.

A multi-axis controller 26, commonly used throughout industry for accurate positioning during manufacturing, inspection and other operations, carries the fixture 20 and article 18. The controller 26 comprises a servo 28 for driving a cross-slide 30 linearly about each of an X-axis 32 and a Y-axis 34 according to instructions from a computer 36. Since the cross-slides 30 move linearly within an X-Y plane only, movement within a Z-axis 38 is constant. The controller 26 provides access to surfaces 16, without having to reposition or remove the article 18 from the fixture 20.

The computer 36 comprises a memory device 40 for storing data and a processor 42 for manipulating the data. The computer 36 also instructs the controller 26 to position the cross-slides 30 about the X-Y plane by means of the servos 28. The processor 42 may be programmed using C++ or any other suitable programming language.

A thermal imaging camera 44 capable of generating an infrared digital image is mounted above the article 18 on one of the cross-slides 30 of system 10 as shown in FIG. 1. Such cameras 44 typically have a view area defined by a large number of individual areas, otherwise known as pixels. The camera 44 is also capable of generating a black and white digital image for use in correlating thermal data to a spatial location on the surface 16. Because each of the images is stored in a digital format by the computer 36, the processor 42 may manipulate the data for each pixel in the camera view.

A laser spot projector 46 and a laser spot sensor 48 are mounted proximate the thermal imaging camera 44 on one of the cross-slides 30. Since the projector 46 and sensor 48 are mounted to one of the cross-slides 30, the spot projector 46 and spot sensor 48 move together as the cross-slides 30 traverse the article 18. A scan line density, or distance between constant X-axis 32 and Y-axis 34 scan positions (or scan lines), may be increased or decreased to produce a desired surface 16 resolution.

A small diameter laser beam 50, typically fifty micrometer or less, is directed from the spot projector 46 toward the surface 16 and the sensor 48 receives a reflected light 52 back from the surface 16. By measuring where the reflected light 52 contacts the spot sensor 48, the Z-axis 38 distance from the surface 16 to the spot projector 46 may be calculated through triangulation. The z-axis 38 distance varies in response to changes in the topology of the surface 16. A Keyance, LV series laser spot projector 46 and spot sensor 48 were used in the exemplary system 10.

While scanning the surface 16, the spot sensor 48 outputs a calibrated Z-axis 38 distance as an analog voltage to the memory device 40. The corresponding, instantaneous X-axis 32 and Y-axis 34 distances are read from the servos 28 driving the cross-slides 30. These three data sources: the X-axis 32 and Y-axis 34 distances from the servos 28 and the Z-axis 38 distance calibrated from the spot sensor 48, are captured continuously using a high-speed PC data bus and are stored in the memory device 40 as a series of points 54. Once the points 54 are stored, they may be manipulated by the processor 42 to calculate the location and angular orientation of the holes 12.

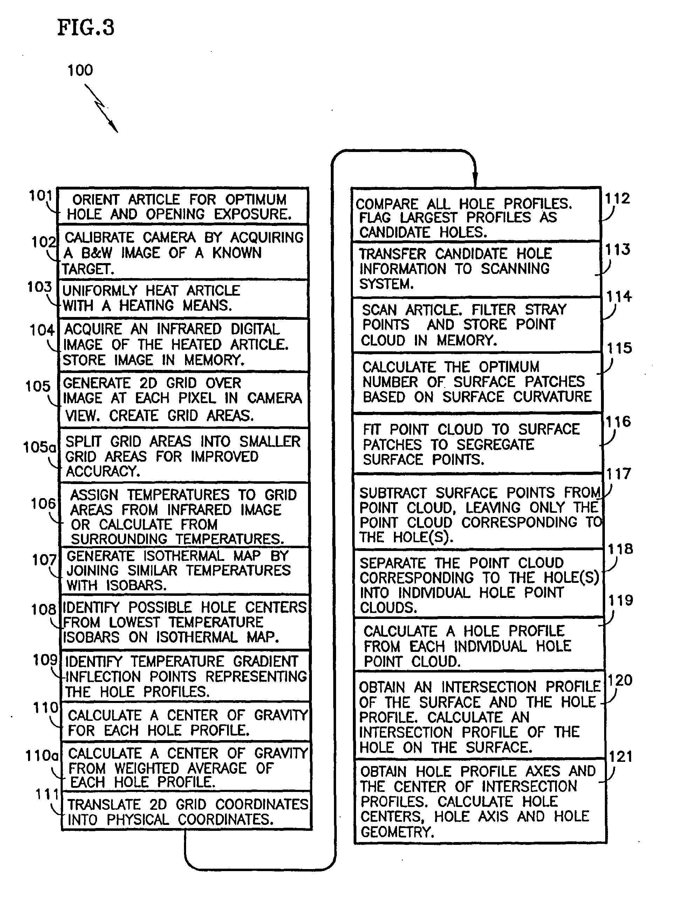

Referring now to step 101 of the present method illustrated in FIG. 3, the article 18 is oriented so the maximum number of holes 12 and openings 14 are exposed for scanning by the system 10. A typical article 18 that is properly oriented for scanning is best illustrated in Fig. 1. It is important that a maximum candidate hole 12 to surface 16 intersection area is exposed to the system 10 to ensure all the candidate holes 12 and openings 14 are captured during scanning. The optimal orientation may be determined through experimentation or from a Computer Aided Design (CAD) file of the article 18 if one exists.

The camera 44 is calibrated in step 102 by taking a black and white digital image of a known grid target. Typically, a tooling ball 56 affixed to the fixture 20 relative to the grid serves as the known target for the scanning system and is positioned a known distance from the one or more article datum 22. The target center point is then set as the origin of the physical coordinates for use in subsequent calculations.

After the camera 44 is calibrated to the physical coordinates of the article 18, the article 18 is uniformly exposed in step 103 to a rapid flash heating means, typically a radiant heater 58. The radiant heating sufficiently raises the temperature of the article to differentiate the heated surfaces 16 from the holes 12 by the sensitive camera 44.

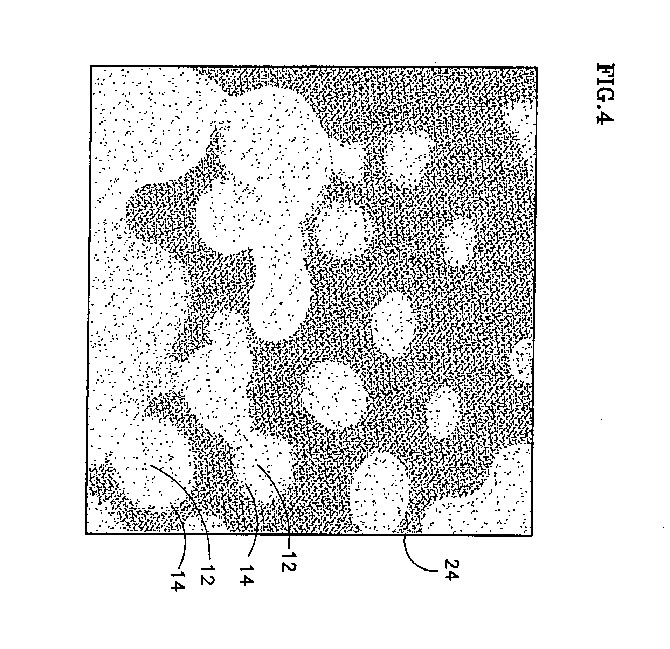

Once the surface 16 has reached a steady temperature, an infrared digital image of the surface 16 is acquired by the camera 44 and stored in the memory device 40 as depicted in step 104. In the example infrared image of FIG. 4, the holes 12 have the lowest temperature and the surface 16 has a uniformly higher temperature. The hole 12 to surface 16 interface near the opening 14 has a temperature gradient, which gradually rises from that of the hole 12 temperature to that of the surface 16 temperature.

Once the digital images are stored in the memory device 40, the processor 42 generates two-dimensional grids 60 over the surface 16 at each pixel in the camera 44 view as depicted in step 105. The two-dimensional grids 60 separate the surface 16 into a finite number of grid areas 62 for analysis in the remaining method steps. For improved accuracy, each grid area 62 may be split into multiple grid (sub-grid) areas 62 as depicted in step 105a. Step 105a may be applied to all the grid areas 62 or specifically to those located proximate the holes 12.

In step 106, a temperature value of the center point 64 of each grid area 62 is determined from the temperature information in the infrared image. Temperature values are assigned to the center points 64 of the grid areas 62 (or by interpolation, weighted average or other mathematical algorithm if sub-grid areas 62 are used). By joining the center points 64 having a similar temperature in step 107, a series of isothermal lines are created. The isothermal lines form an isothermal map of the surface 16 and hole 12 regions. The lowest temperatures on the isothermal map are identified as potential center points 64 in step 108. The grid areas 62 surrounding the center points 64, and within a predetermined temperature range, are identified as belonging to the holes 12.

Temperature profiles are analyzed in small iterations in step 109, until inflection points representing the interface of the lower temperature gradients of the surface 16 and the much higher temperature gradients of the holes 12 are encountered. These inflection points represent the hole profiles 66. Once the location of the hole profiles 66 are determined, a center of gravity 68 for each hole profile 66 is calculated in step 110 by locating the center points of the lowest temperature grid areas 62. Also, the center of gravity 68 may be calculated more precisely by interpolating the temperature of sub-grids using available temperature data from neighboring grids as a weighted average. The sub-grid center points are found as boundary points of the hole, where the temperature inflection is at a maximum. For improved accuracy, the center of gravity 68 may be calculated from the weighted average of the temperature gradient changes of the hole profiles 66 in step 110a. In this step, the center of gravity 68 is calculated from the boundary points of the hole 12, rather than taking the center of the coolest temperature grid area 62 as the center of gravity 68.

Once the center of gravities 68 are located and stored in the memory device 40, the two-dimensional grid 60 coordinates are translated into corresponding physical coordinates in step 111. The translation is made by correlating the physical coordinates from the black and white digital image data stored earlier in the memory device 40 to the two-dimensional grid 60 coordinates of the center of gravities 68. The sizes of the hole profiles 66 are compared and the holes 12 with the largest hole profiles 66 are flagged as candidate holes 12 in step 112. The candidate holes 12 are less obstructed and provide the most useful geometries for further processing by the scanning system. In step 113, the physical coordinates of the center of gravities 68 of the candidate holes 12 are transferred to the scanning portion of system 10 for further processing.

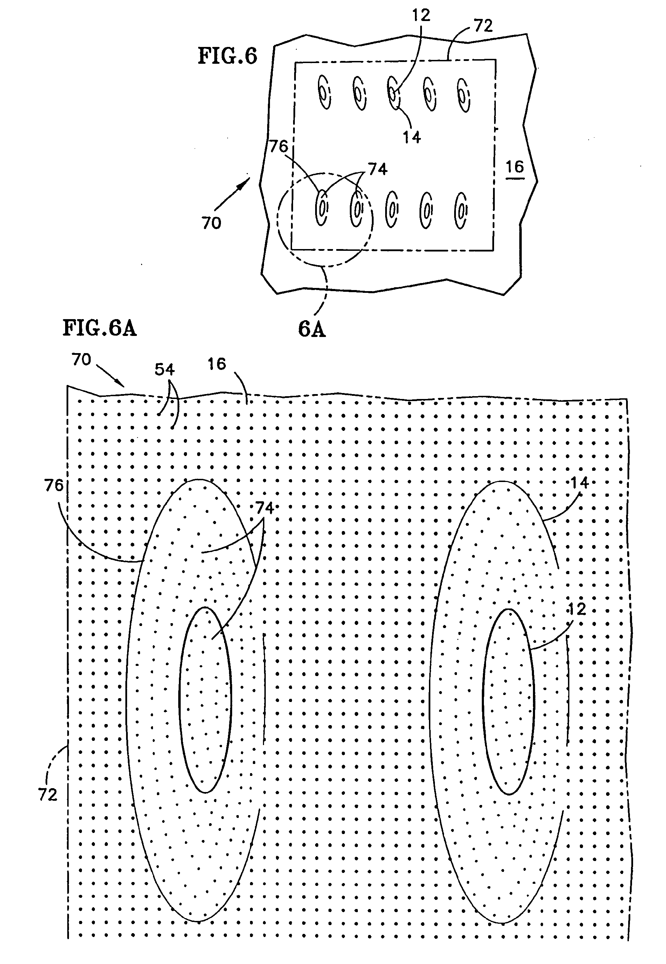

Referring now to step 114 of FIG. 3, the topography of the exposed surface 16 surrounding the candidate holes 12 is scanned using the scanning portion of the system 10 as earlier described. The surface 16 topography is captured and stored as individual points 54 known as a point cloud 70, an example of which is illustrated in FIGS. 6 and 6a. The point cloud 70 is filtered to remove all outlying and extraneous points created by stray laser beam 50 reflections and system 10 vibration. The filtered point cloud 70 is stored in the memory device 40 for further manipulation by the processor 42.

Manipulation of the point cloud 70 begins in step 115 by calculating an optimum number of surface patches 72 to split the point cloud 70 into. The calculation of the optimum number of surface patches 72 is based on the surface curvature, scan line density, resolution desired in the candidate hole region 24 and the computation time allotted. Surfaces 16 with extreme curvature will have the point cloud 70 separated into more surface patches 72 than surfaces 16 with minimal curvature. The importance of this step will become apparent, as the remaining method steps are described in detail below.

The points 54 within each surface patch 72 are individually analyzed in step 116 to determine which points 54 represent the surface 16. If the points 54 making up the surface 16 are closer than a specified distance away from all neighboring points 54, then they belong to the surface 16. The specified distance is based upon the surface 16 curvature and scan line density. Points 54 representing the surface 16 follow a predictable pattern and are nearly uniform in distance away from any other surface points 54. Step 116 is important, because a point 54 belonging to a candidate hole 12 or opening 14 will be located a greater distance away from any point 54 residing on the surface 16. The points 54 representing the candidate holes 12 or openings 14 do not belong to a surface 16 and therefore, can be easily identified and segregated.

With the surface patches 72 now containing only those points 54 that represent the surface 16, the points 54 representing the candidate holes 12 and openings 14 are isolated into a single group in step 117. The points 54 that represent the surface 16 are digitally subtracted from the point cloud 70 to reveal a hole cloud 74 (FIGS. 6 and 6a) representing only the candidate holes 12 and openings 14 but not the surface 16. The hole cloud 74 is further separated into individual hole clouds 76 based on the nominal, X-axis 32 and Y-axis 34 distances between candidate holes 12 in step 118. In practice, the separation of the hole cloud 74 into individual hole clouds 76 happens easily, given the distances between holes are relatively large compared to the distances between points in the hole cloud.

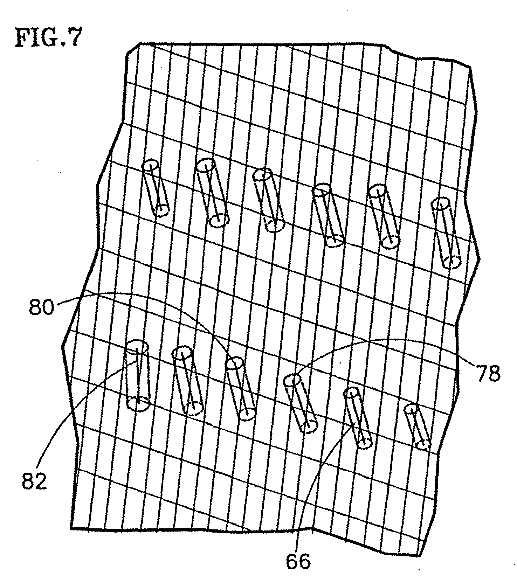

With each candidate hole 12 and opening 14 now defined by an individual hole cloud 76, hole profiles 66 (FIG. 7) are calculated in step 119. Typically, the coating only obstructs portions of the openings 14, so points 54 representing the inside of the candidate holes 12 are available for manipulation. For any conic shape such as a cone or a cylinder, only a minimum number of points 54 are required to define the full geometry. If many points 54 are available in the individual hole clouds 76, which is generally the case, then a best fitting algorithm may be used to calculate an even more accurate candidate hole 12 geometry. For other candidate hole 12 geometries (shaped holes), such as rectangular (not shown), the individual hole clouds 76 are compared to corresponding template geometries and hole profiles 66 are created using a best fit algorithm.

Now that the hole profiles 66 are created, intersection profiles 78 of the openings 14 on the surface 16 are calculated in step 120. Points 54 from each of the hole profiles 66 and the surface 16 are compared and the closest points 54 representing the surface 16 are extracted. From the extracted points 54, intersection profiles 78, representing the intersection of the openings 14 and the surface 16 are created.

From the hole profiles 66 and intersection profiles 78, representations of the actual candidate holes 12 are created in step 121. Round candidate holes 12 are represented as cylinders terminating at the surface 16. An example is illustrated in FIG. 7. The hole centers 80, hole axes 82 and the hole profiles 66 are stored in the memory device 40 for calculation of the entire hole 12 pattern or distribution over the surface 16.

The pattern of holes 12 is calculated in step 122 from the center of gravities 68 of the candidate holes 12. The entire pattern of holes 12 may be calculated, even if only a few of the candidate holes 12 can be accurately located. Since the holes 12 that make up a pattern are originally installed in spatial location and angular relation to one another, the pattern is discernable from the position of the candidate holes 12.

Once the hole 12 pattern is calculated and stored, it is later used by a laser, abrasive water jet or other suitable reaming device to clear each of the holes 12 of obstruction.

Since the pattern of hole centers 80, hole axes 82 and hole profiles 66 is calculated and stored in relation to the one or more preexisting datum 22, it is important that the reaming device account for this. A fixture 20 that is correlated to the datum 22 and the reaming apparatus coordinate system must be used.

While embodiments of an inventive system and method have been described in the context of obstructed film cooling holes in turbine components, it is to be understood that other articles with obstructed holes would similarly benefit. For example, a perforated article that has been painted after the perforations are formed would benefit. Accordingly, the present invention is intended to embrace those alternatives, modifications and variations as fall within the broad scope of the appended claims.

## Claims

1. A method of determining a location and an angular orientation of a pattern of holes (12) with obstructed openings (14) that reside on a surface (16) of an article (18) that includes at least one datum (22), comprising the steps of:
providing a system including a multi-axis controller (26), a heater (58), a digital thermal imaging camera (44), a laser spot projector (46), a laser spot sensor (48), a memory device (40) and a processor (42);
heating the article with the heater (58);
identifying one or more candidate holes (12);
scanning the one or more candidate holes (12) by projecting a laser beam (50) from the laser spot projector (48) and receiving laser light reflections (52) with the spot sensor (48) while moving said projector (48) and said sensor (50) in relation to the article (18) with the controller (26);
storing points (54) in said memory device (40) as a point cloud (70) representing the surface (16) and the one or more candidate holes (12) in relation to the at least one datum (22);
manipulating the point cloud (70) with said processor (40) to determine the location and angular orientation of the one or more candidate holes (12) in relation to the at least one datum (22);
calculating a location and angular orientation of the pattern of holes from the location and angular orientation of the one or more candidate holes (12).

2. The method of claim 1, wherein the identifying step further comprises acquiring a two dimensional pixel image and a one dimensional thermal pixel image of the holes (12) with the camera (44) and storing the images in the memory device (40).

3. The method of claim 2, wherein the identifying step further comprises generating two dimensional geometric grids (60) from the pixels.

4. The method of claim 3, wherein the identifying step further comprises comparing the thermal pixel image with a center point (64) of each geometric grid (62) and generating isobars representing like ranges in temperature.

5. The method of claim 4, wherein the identifying step further comprises identifying hole center of gravity points (68) from the lowest temperature isobars and identifying possible hole profiles existing within a predetermined range of the lowest temperature.

6. The method of claim 5, wherein the identifying step further comprises adjusting the predetermined range in small increments in order to identify transitions from areas of a lower temperature gradient to areas of a higher temperature gradient.

7. The method of claim 6, wherein the two dimensional geometric grids (62) are split into sub grids in the transitions.

8. The method of claim 6, wherein the identifying step further comprises locating a center of gravity for each of the transitions.

9. The method of claim 8, wherein the center of gravity for each of the transitions is located by calculating a weighted average of lowest temperature.

10. The method of claim 8, wherein the identifying step further comprises translating a number of pixel coordinates to a number of physical coordinates.

11. The method of claim 10, wherein the identifying step further comprises comparing the size of each hole profile and selecting only the holes with profiles comprising the largest area.

12. The method of any preceding claim wherein the manipulating step further comprises filtering the point cloud (70) to remove points (54) that are beyond a predetermined distance away from any other point (54) in the point cloud (70), leaving a point cloud (70) representing the surface.

13. The method of claim 12 wherein the manipulating step further comprises subtracting the point cloud (70) representing the surface (16) from the point cloud representing the scanned region to isolate a point cloud (70) representing the one or more holes (12).

14. The method of claim 13 wherein the manipulating step further comprises isolating one or more individual point clouds (70), each representing a single hole (12) from the point cloud (70) representing the one or more holes (12).

15. The method of claim 14 wherein the manipulating step further comprises creating an individual hole profile from each of the individual point clouds (70).

16. The method of claim 15 wherein the manipulating step further comprises extracting points (54) from both the point cloud (70) representing the surface (16) and the individual hole profiles and creating an intersection profile (78) representing an opening for each hole (12).

17. The method of claim 16 wherein the manipulating step further comprises calculating a hole center (80) and a hole profile axis (82) from the intersection profile (78) to create a hole form for each hole (12).

18. The method of claim 17 wherein the manipulating step further comprises calculating a location and angular orientation of each hole (12) from the hole forms and in relation to the at least one datum (22).

19. A system (10) for determining a location and angular orientation of a pattern of holes (12) with obstructed openings (14) that reside on a surface (16) of an article (18) comprising:
a thermal imaging camera (44) capable of acquiring infrared and black and white pixel images of the surface (16) in a region (24) containing a hole (12);
a laser spot projector (46) for projecting a laser beam (50) onto the surface (16) in a region containing a hole (12);
a laser spot sensor (48) for receiving laser light (52) reflected from the surface (16);
a multi-axis controller (26) for traversing said camera (44), laser (46) and sensor (48) about the surface (16);
a memory device (40) for storing the digital images and a series of points (54) from said sensor and said traversing means, said series of points (54) being stored in the form of a point cloud (70); and
a processor (42) for calculating the location of a candidate hole (12) from the pixel images, manipulating the point cloud (70) and calculating a spatial position and angular orientation for the pattern of holes (12).
